Europäisches Patentamt

(19) European Patent Office

Office européen des brevets

(11) Publication number: **0 109 852**
**A2**

(12) # EUROPEAN PATENT APPLICATION

(21) Application number: **83307108.7**

(22) Date of filing: **21.11.83**

(51) Int. Cl.³: **B 32 B 15/08**

(30) Priority: **23.11.82 GB 8233310**

(43) Date of publication of application:
**30.05.84 Bulletin 84/22**

(84) Designated Contracting States:
**AT BE CH DE FR GB IT LI LU NL SE**

(71) Applicant: **UNIVERSITY COLLEGE CARDIFF
CONSULTANTS LTD.
P.O. Box 78
Cardiff, CF1 1XL(GB)**

(72) Inventor: **Wheatley, Barry Ivan
28 Lochaber Street
Roath Park Cardiff(GB)**

(72) Inventor: **Somerford, David John
5 Coed-Y-Llyn
Radyr Cardiff(GB)**

(72) Inventor: **Morgan, Peter Huw
57 Lansdowne Road
Canton Cardiff(GB)**

(72) Inventor: **Routh, Helen
31 Thesiger Street
Cathays Cardiff(GB)**

(74) Representative: **Arthur, Bryan Edward et al,
Withers & Rogers 4 Dyer's Buildings Holborn
London EC1N 2JT(GB)**

(54) **Display devices.**

(57) A display device for maps, notices, drawings and the like comprises a layer or layers C of insulation material sandwiched between layers of electrically conductive material B. A light-emission device can be used to illuminate something A placed on the outer conductive layer and is electrically supplied via layers B. A further insulation layer D and a supportive base board E may be disposed beneath the aforesaid layers B, C.

Fig.3.

EP 0 109 852 A2

0109852

## DISPLAY DEVICES.

This invention relates to display devices and, more particularly, to a display device selected zones of which can be illuminated.

According to this invention, a display device comprises one or more confronting layers of insulation material, having disposed adjacent the two outer major surfaces electrically conductive material in the form of a layer, a grid or a pattern and means for connecting the electrically conductive material to a source of electric power.

Throughout this specification including the claims the layer, grid or pattern of electrically conductive material will be referred to simply as a layer of electrically conductive material.

The display device in accordance with this invention is preferably in the form of a laminated assembly which can be readily pierced and in which the insulation material is sandwiched between two continuous "layers" as herein defined of electrically conductive material. Selected zones of the laminated display device may be illuminated by means of a light emission device which includes two electrically conductive, insulated members and which is shaped to pierce the laminated assembly so that one member makes electrical contact with one "layer" of electrically conductive material and the other member makes contact with the other "layer" of electrically conductive material thereby illuminating the light emitting device when the said two "layers" are connected to a source of electric power, the layers of electrically conductive material may be made from aluminium or other metallic foil.

If desired, at least one "layer" of electrically conductive material may be overlaid by a surface layer of material bearing information to be displayed, for example, a map, scheme, plan, picture, a counter or board game outline (e.g. battle ships) etc. Thus, if a user wishes to illuminate or highlight one or more zones of the overlaid surface layer, it is a simple matter to insert an appropriate number of light emitting devices into required zones of the overlaid surface layer in the manner of a drawing pin. The light emission device may indicate different colours.

Preferably, the material used for the various layers of the laminated display device are made from an elastic material or are at least based upon an elastic material so that holes made during piercing may tend to close up or even reheal.

Conveniently, each "layer" of electrically conductive material is sandwiched between two sheets of elastic material having properties which assist in the self healing of the electrically conductive material after piercing by a light emitting device. The use of such elastic material also assists in making and maintaining adequate electrical contact between the electrically conductive members of the light emission device and the "layer" of electrically conductive material. The said electrical contact may also be improved by incorporating a finely divided conductive material, such as graphite or carbon black within one or both of the sheets of elastic material between which the layer of electrically conductive material is sandwiched.

The layer of insulating material may be made from any electrically non-conductive material which is soft enough to allow the electrically conducting members of the light emission device to pierce the layer but sufficiently firm to grip the electrically conductive member which must pass through the layer of insulation to make electrical contact with that layer of electrically conductive material furthest away from the point where the light emission device pierces the display device. The thickness of the layer of insulation material is governed by the differences in length of the two electrically conductive members of the light emission devices so as to allow conductive members to make contact with the appropriate "layer" of electrically conductive material.

Our investigations have shown that suitable insulation materials include polystyrene, elastomers e.g. coated with a layer of silicone rubber or PVC, rubber and cork secured to the layers of electrically conductive material using suitable adhesives.

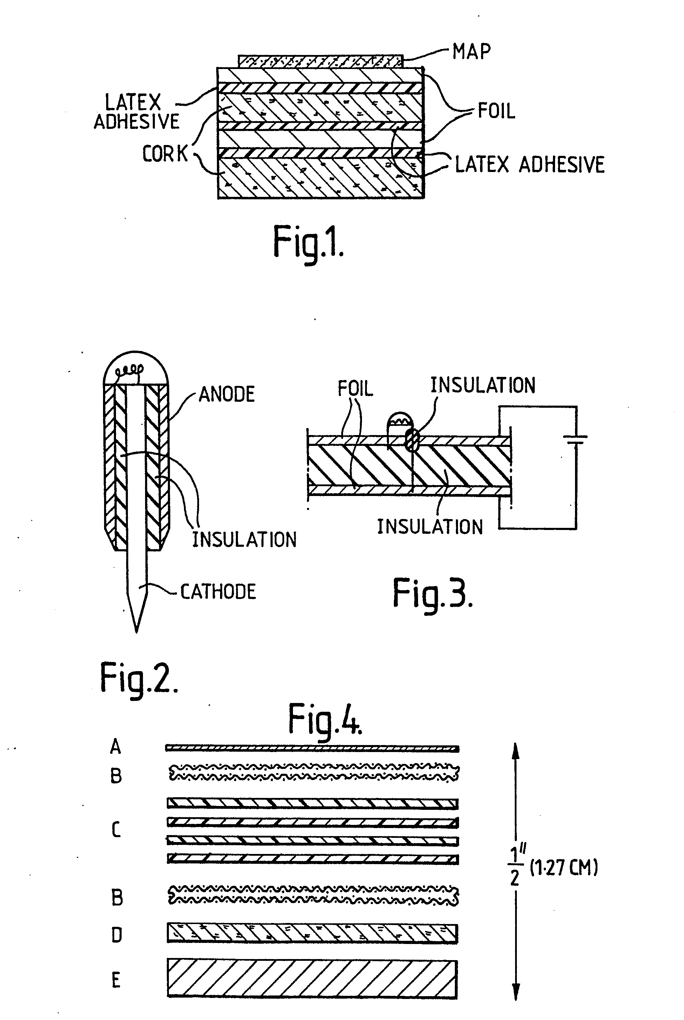

Preferably, the laminate formed by the layer of insulation material, the layers of electrically conductive material and the overlaid surface layer are supported by a backing of for example cork or fibreboard. The backing should be chosen not only to support the laminate but also provide an anchor for that electrically conductive member of the light emission device which passes in use, through the layer of insulation material. One form of display device in accordance with the invention is shown in section and schematically in Figure 1.

The light emission device may be a light emission diode capable of being illuminated by a low voltage power source. Small tungsten bulbs, miniature bi-pin lamps or gas discharge bulbs may be used for example. In all cases the conductors or electrodes of the device are insulated and made of appropriate length to make electrical contact with the appropriate "layer" of electrically conductive material. Preferably, the conductor/electrode structure of the light emission device is similar to that of a "jack-plug" thereby producing adequate strength for repeatedly piercing the laminated display device. One form of light emission device constructed on the "jack-plug" principle is shown in Figure 2 and Figure 3 indicates, schematically, a display device connected to a power source. The power source may be battery or mains.

Another example of a display device according to this invention is described with reference to Figure 4, which is an exploded, diagrammatic view.

The display device comprises a plurality of confronting layers of electrical insulation disposed between confronting layers of electrically conductive material. The display device has a base support layer E, made of for example plywood and above this, a further insulation material e.g. a cork layer D, which may alternatively be made of a knitted material.

Thus, the insulation in the device may comprise one or more different materials as may the conductive layers.

material.

A pair of electrically conductive layers B is located above the cork layer D, which may be made of "knitmesh", i.e. stainless steel and/or copper, copper alloy or other suitable alloy, in the form of "socks" i.e. flattened tubes. Woven or non-woven metal-coated insulative fibres, e.g. glass fibres coated with Aluminium, may be alternatively employed as the electrically conductive material.

There are four insulation layers C between the conductive layers B and these can take the form of polypropylene "socks".

This display board, of typical thickness $\frac{1}{2}$" (1.24 cm.), is used by placing the layer to be displayed A, e.g. a map, over the outer knitmesh layer B and one or more light emission devices, e.g. as illustrated in Figure 2, may be inserted into the device so as to provide an electrical circuit between the conductive layers B and including the device. Power is supplied to the conductive layers and the light-emission device lights up. It should be understood that the light-emission device need not take the exact form shown in Figure 2. For example the conductive region may be of any desired size and shape so as to be able to electrically link the conductive layers in the display device and to cause light to be emitted from the filament. More than two conductive layers may be employed if desired in the display board.

The display device of this invention is particularly effective for illuminating written or printed matter such as diagrams, maps and pictures. It may be employed in, for example,:-

i) illuminated notice boards where letters and numerals could be installed with bulbs;

ii) games, e.g. battle ships, darts, board games;

iii) tactical maps where temporary features have to be indicated;

iv) decorative items - Christmas trees, garlands, picture boards.

It must be understood that many variations of this invention are possible according to the principle of the invention as defined in the claims and hence, the scope of the invention is only to be limited by the claims. For clarification, one or more insulation layers and/or more than two electrically conductive layers may be used. If the display device has more than two confronting electrically conductive layers, light emission devices of different lengths are employed so as to be able to electrically connect a different one of the pairs of electrically conductive layers. Thus, different light emission devices and areas of the item to be displayed may be lit up independently of one another, at the same or different times.

It will also be obvious that the display device according to this invention may occupy only a part of a larger display device.

0109852

- 7 -

CLAIMS:

1. A display device comprising one or more confronting layers of insulation material, having disposed adjacent the two outer major surfaces electrically conductive material in the form of a layer, a grid or a pattern and means for connecting the electrically conductive material to a source of electric power.

2. A display device according to claim 1, further comprising at least one light-emission device having two insulated conductive members being insertable through the layers of the device so as to each make electrical contact with a different one of the conductive layers.

3. A display device according to claim 2, wherein the light-emission device is selected from the group consisting of light emission diodes, tungsten bulbs, miniature bi-pin lamps and gas discharge bulbs.

4. A display device according to claim 2 or claim 3, wherein the layers are made from elastic materials having a tendency to close up or reheal after piercing by the light-emission device.

5. A display device according to claim 4, wherein each layer of electrically conductive material is disposed between two sheets of elastic material.

6.   A display device according to claim 1 or claim 2, wherein the insulation material is selected from the group consisting of polypropylene, polystyrene, rubber, cork and elastomers coated with a layer of silicone rubber or PVC.

7.   A display device according to claim 1 or claim 2, wherein the electrically conductive material is selected from the group consisting of stainless steel/copper, and metal-coated insulative fibres.

8.   A display device according to claim 1 or claim 2, having a supportive base.

0109852

1/1

Fig.1.

Fig.2.

Fig.3.

Fig.4.